# EUROPEAN PATENT APPLICATION

(11) **EP 1 355 303 A1**
(43) Date of publication of application: **22.10.2003**
(21) Application number: 02710344.9
(22) Date of filing: 24.01.2002
(51) Int. Cl.: G11B 7/26, G11B 7/24

(54) **METHOD FOR PRODUCING OPTICAL DISC AND OPTICAL DISC PRODUCED BY THAT METHOD**

(30) Priority: 26.01.2001 JP 2001019235
(71) Applicant: Kitano Engineering Co., Ltd., Komatsushima-shi, Tokushima-ken 773-0008 (JP)
(72) Inventor: KITANO, Ryoko, Komatsushima-shi, Tokuyhima 773-0008 (JP); YANO, Naoto, Komatsushima-shi, Tokuyhima 773-0008 (JP); YOSHIDA, Masayuki, Komatsushima-shi, Tokuyhima 773-0008 (JP)
(74) Representative: Goddar, Heinz J., Dr.
(86) International application number: JP0200521
(87) International publication number: WO02059891

(57) **Abstract**

Provision is made for a method for manufacturing an optical disc with as lessened to the utmost and for the optical disc manufactured by that method.

A first single layered disc and a second single layered disc, that is, two sheets of single layered disc are laminated to integrate them as a unit to manufacture the optical disc wherein a phase difference in the direction of rotation is given between the first single layered disc and the second single layered disc for lamination.

In this connection, the first single layered disc and a second single layered disc are included in different manufacturing lot L.

The phase difference θ in the direction of rotation is such the phase difference that the single layered disc selected from the manufacturing lot L having the first single layered disc and the single layered disc selected from the manufacturing lot L having the second single layered disc are laminated by shifting in a plurality of number of times within range of 0° ~ 360° to render the tilt minimum.

## Description

### Technical Field

### (Technical field to which the invention pertains)

This invention relates to an optical disc, and more particularly, to a method for manufacturing optical disc capable of rendering a tilt low as much as possible.

### Background of Art

### (Prior Art)

Recent years, the optical disc is required not only to have a greater capacity but also to improve more and more an information readable performance.

Among others, for instance, a digital video disc hereinafter referred to ("DVD") is fabricated by laminating two thin single layered discs to have integrated structure.

In order to read an information from a pit by means of laser beam, DVD is required to have strict quality from the point of view of dimension and accuracy.

At present stage, DVD is formed by bonding two single layered discs (disc substrates) by sandwiching a certain adhesive agent to produce an integrated DVD.

An ultraviolet curable resin as an adhesive agent is applied in the form of a ring to the lower single layered disc and then the upper single layered disc is laid thereon.

Next, both of the single layered discs are simultaneously rotated to have ultraviolet curable resin ductile over a wide range of the substrate.

Finally, ultraviolet rays are irradiated to both of the single layered discs to cure the developed ultraviolet curable resin so that both of the single layered discs are integrated to obtain the optical discs.

The single layered discs are, however, dimensioned to have a thickness of 0.6mm and an outer diameter of 120mm,and an inner diameter of its central hole of 15mm.

Since such a thin disc is formed, tilt phenomenon (inclusive of tangential tilt and radial tilt), the so-called "axial deflection" is presented after having manufactured.

In this connection, it is said that this type of tilt phenomenon is mainly resulted from uneven distribution of internal stress on the single layered disc.

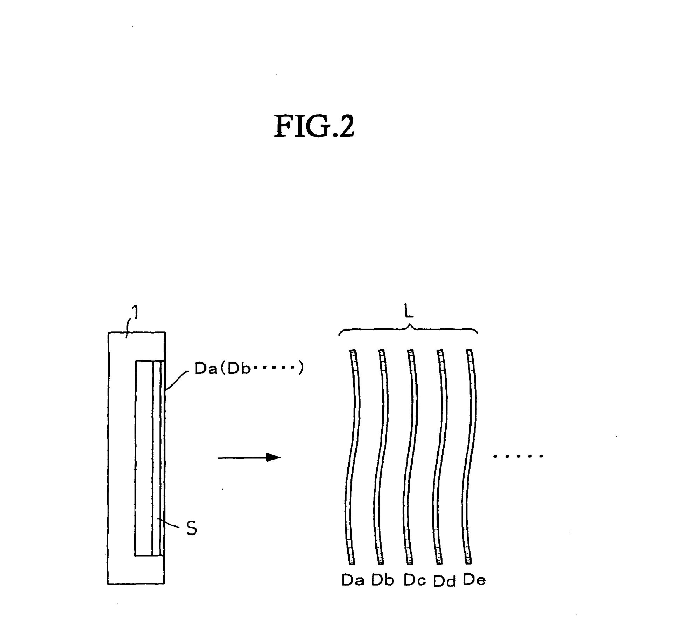

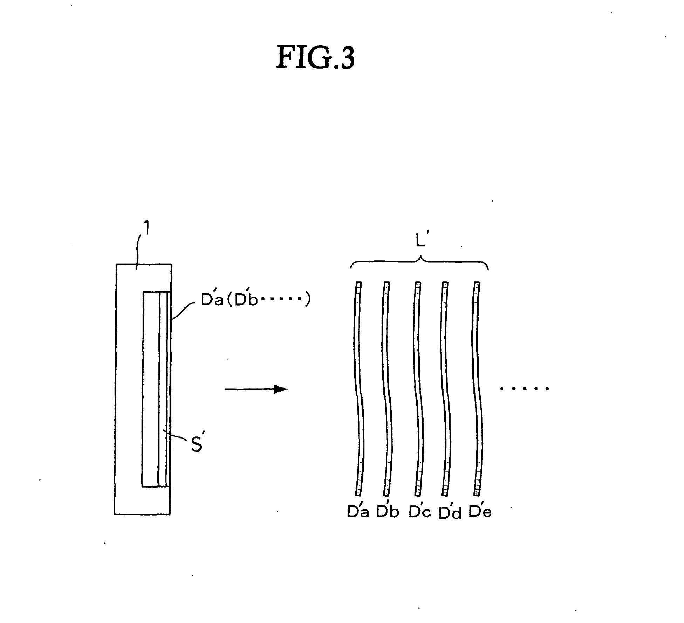

Thereupon, when each of the upper and lower single layered discs are manufactured respectively, if circumstances require to include each in the same manufacturing lot (that is, each of the upper single layered discs is included in the upper single layered manufacturing lot whereas each of the lower single layered discs is included in the upper single layered manufacturing lot), the tilt of the individual single layered disc presents the same configuration as a molding condition is the same when injection molded in each of the manufacturing lots (internal stress condition is almost the same) the tilt of the individual single layered disc is included in the instant manufacturing lot (see, Fig.2 and Fig.3).

Incidentally speaking, the manufacturing lot comprises each of the single layered discs injection molded by the same stampers.

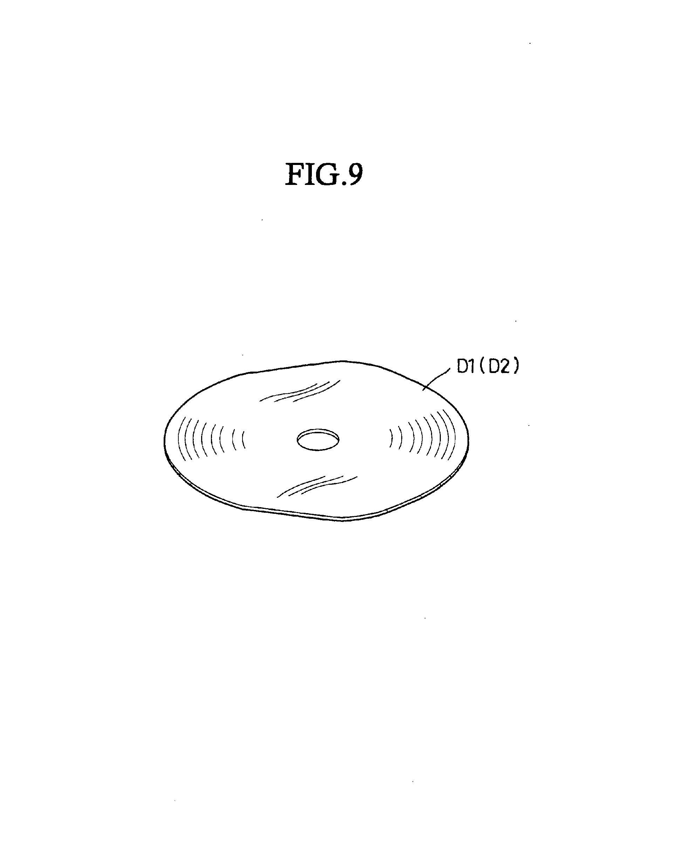

Fig.9 shows a representation of the tilts (in this case, the tangential tilts are exaggeratedly shown) generated on the single layered disc).

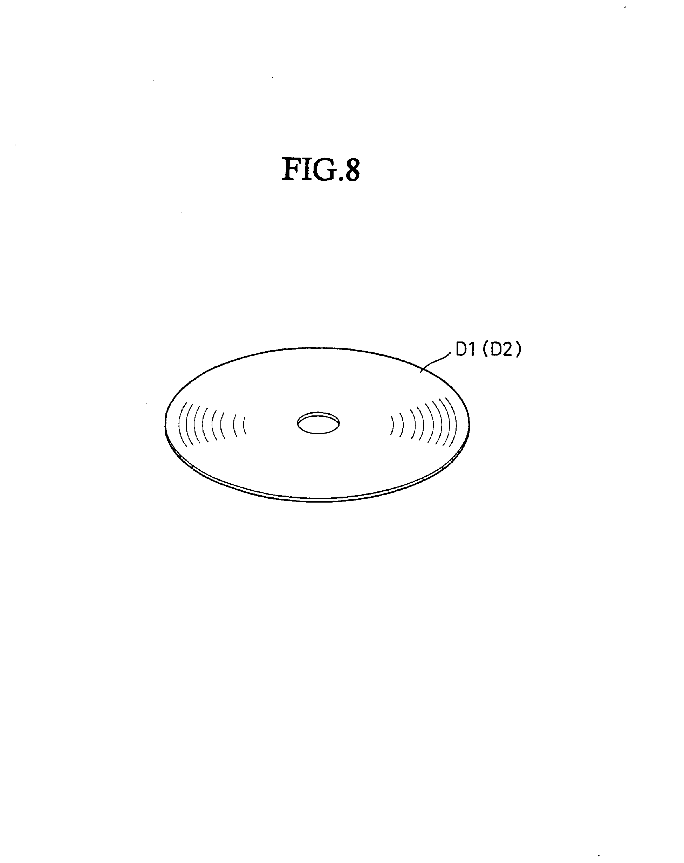

For information, Fig.8 illustrates an ideal single layered disc without any tilt, which is as good as can be.

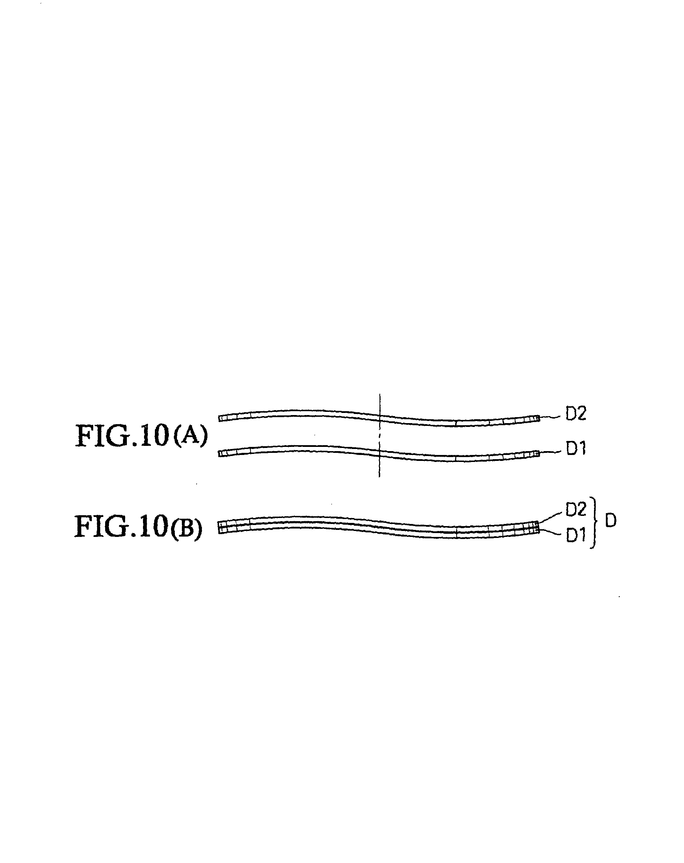

For this reason, when both of the single layered discs are laminated, for example as shown in a principle representation of Fig.10 [(A→B)] concaves and convexes in the upper and lower single layered discs are laid to overlap each other to present the optical disc in which configurations of the tilt of each of the upper and lower single layered discs are integrated as a unit.

In other words, convex corrugations in the upper and lower single layered discs are engaged in each other.

In the same manner, the convexes in the upper and lower single layered discs are engaged in each other to integrate therewith where the both of the single layered discs assume the form of corrugated form as they are.

For the optical disc, the tilts of the both the upper and lower single layered discs are left as they are.

Such tilt, mainly, the tangential tilt is adapted to have a significant effect thereon when an information is read by an optical disc player.

Although what have been above mentioned is an extreme case, it is understandable that a tilt phenomenon as the optical disc may be observed by at least laminating the upper and lower single layered disc to each other.

Such tilts should be lowest to the utmost from the point of view of quality.

With due consideration for the above, it has been long desired to provide a method for manufacturing an optical disc with tilts rendered less to the most.

### (Problem to be solved by the invention)

The present invention is intended to solve the aforementioned problems.

That is, it is an object of the present invention to provide a method for manufacturing an optical disc with tilts rendered less to the most.

Further, It is another object of the present invention to provide an optical disc manufactured according to the aforementioned method.

### Disclosure of the invention

### (Means for solving the problem)

Thus, the inventors of the present application have endeavored themselves to research on such the subject, and found out that the individual single layered discs include the same tilt form in the same lot when the optical disc is manufactured.

In view of this finding, the present invention has been completed.

That is, the first aspect of the present invention exists (1) in a method for manufacturing an optical disc, wherein two single layered discs, such as a first and second single layered discs are laminated to have them integrated, and wherein a phase difference in the direction of rotation is given between the first and second single layered discs to laminate the same.

The second aspect of the second aspect of the present invention resides (2 ) in a method for manufacturing an optical disc wherein the first single layered disc and the second single layered disc belong to the different manufacturing lots, respectively.

The third aspect of the present invention resides (3) in a method for manufacturing an optical disc that a phase difference in the direction of rotation, which makes a tilt minimum when the single layered disc selected from the manufacturing lot having the first single layered disc and the other single layered disc selected from the manufacturing lot having the first single layered disc and the other single layered disc having the second single layered disc are laminated as laminated by changing the phase a plurality of times within the range of 0° ~ 360° in the direction of rotation.

The fourth aspect of the present invention exists (4) in a method for manufacturing an optical disc wherein the lamination of the first single layered disc and the second single layered disc are made by the use of ultraviolet curable resin.

The fifth aspect of the present invention resides (5) in a method for manufacturing an optical disc wherein the lamination of the first single layered disc and the second single layered disc are made by the use of a double adhesive tape.

The sixth aspect of the present invention resides (6) in a method for manufacturing an optical disc which is made by either one of the methods as aforementioned.

It is possible to employ an invention which comprises more than two combinations of compositions as defined selected out of what is described in the aforementioned aspects.

### (Effect of the Invention)

When the single layered discs are laminated, it is possible to manufacture the optical disc with lesser tilts by simply giving a phase difference between both of the single layered discs.

If a test for laminating the single layered discs according to lot after lot is carried out, the tilts is prevented from generating on the disc by only setting the optimum phase difference as a standard.

### Brief Description of the Drawings

Fig. 1 is an explanatory view showing a theory of minimizing the tilts, according to the present invention;
Fig. 2 is an explanatory view showing a lower single layered disc injection molded from a single stamper S;
Fig. 3 is an explanatory view showing an upper single layered disc injection molded from a single stamper S';
Fig. 4 is a view illustrating that the single layered discs selected from the instant manufacturing lots are in combination for lamination thereof;
Fig. 5 is a view explanatory of a phase difference in both of the single layered discs;
Fig. 6 is a schematic view showing manufacturing steps of the instant optical disc;

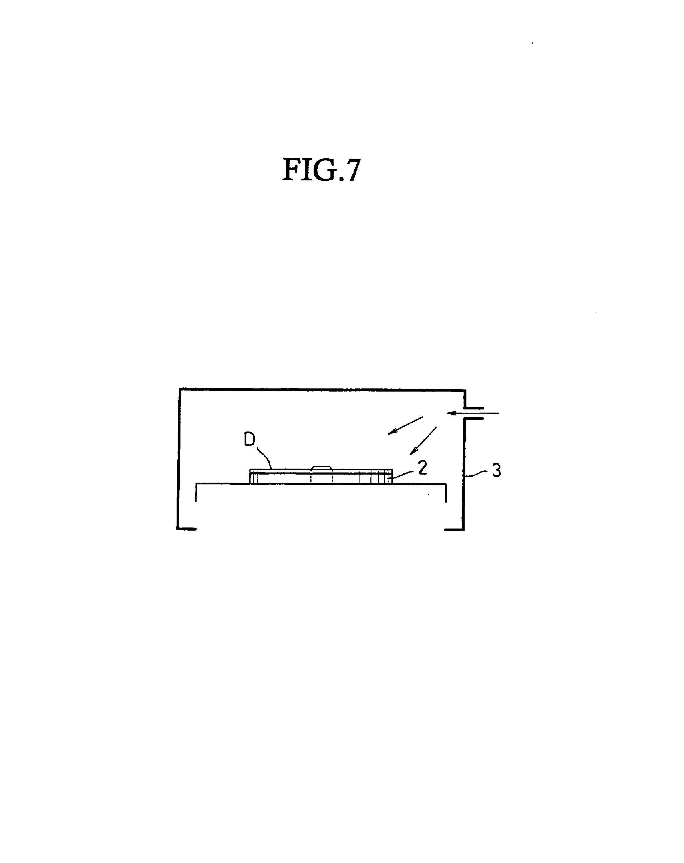

Fig. 7 is a view explanatory of a manner in which air bubbles are eliminated by an atmosphere of the air or gas pressure;
Fig. 8 is a representation showing the single layered disc with no tilt thereon;
Fig. 9 is a representation showing the single layered disc with tilt generated thereon; and
Fig. 10 is a representation showing a principle upon which the conventional tilt phenomenon is observed.

### Best Mode for Carrying out of the Invention

### (Mode for Carrying out of the Invention)

The present invention is intended that under such the condition that the phase difference (relative phase difference) in the direction of rotation is given between the first single layered disc and the second single layered disc, that is, the second single layered disc is shifted with respect to the first single layered disc in the direction of rotation at a certain angle by lamination of the same, the tangential tilts are lessen as much as possible.

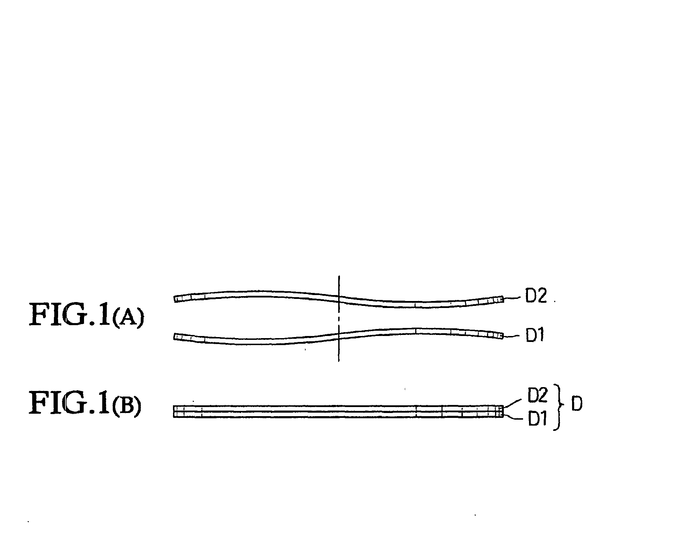

Fig.1 is a view illustrating a principle upon which the tilts are minimized, according to the present invention.

In this instance, the upper single layered disc and the lower single layered disc when manufactured in different manufacturing lots, respectively.

The tilt condition in each upper single layered disc in the same manufacturing lot is the same.

Similarly, the tilt condition in each lower single layered disc in the same manufacturing lot is the same. Supposedly, the lower single layered disc D1 has a corrugated shape as shown, and the upper single layered disc D2 has a corrugated shape as shown [see Fig. 1(A)].

The phase difference in the direction of rotation is given between the lower single layered disc D1 and the upper single layered disc D2 to position them.

At this time, the phase difference is such that the tilt is lowest at most when both of the single layered discs are integrated.

Additionally speaking, this phase difference is the value obtained by a laminating test according to the subject manufacturing lots.

Both of the single layered discs are bonded through adhesives.

As a result, as shown Fig. 1 (B), the optical disc D is formed in the state where the tilt is lowest.

Theoretically speaking, when both of the single layered discs are laid on the top of the other ,the concave and the convex of both of single layered discs D1, D2 are over against each other to afford a space there between.

Both of the single layered discs are, however, bonded to each other in a conjugated condition to have no space, thereby forming a straight optical disc D.

Stated otherwise, a space is formed between convex corrugations in the upper and concave corrugations in the lower single layered discs and a space is formed between convex corrugations in the upper single layered discs D2 and convex corrugations in the lower single layered discs D1. These spaces are eliminated by bonding the both by adhesive.

As above stated in the case of Fig. 10, the tilt on the single layered disc may not be highly exhibited.

Single layered disc D1 and the upper single layered disc D2 according to such the principle.

It is a radical instance where the tilt may be eliminated, however, it is understandable that the tilt after both of the single layered discs have been laminated may be lessened to the most by giving the relative phase difference between the lower single layered disc D1 and the upper single layered disc D2 according to such the principle.

Next, how to lessen the tilt in the actual optical disc manufacturing will be explained hereinafter.

Explanation may be carried out as to the manufacturing lot L which includes the individual upper single layered discs Da, Db,Dc, and De.... injection molded from the same stamper S (set in the mold 1) and the manufacturing lot L' which includes the individual upper single layered discs D'a, D'b ,D'c, and D'e ···· similarly injection molded from the same stamper S'.

Normally, tens of thousands of the single layered discs Da, Db, Dc, Dd, De ···· for example, several thousand(for example, twenty~thirty thousands) (D'a, D'b, D'c, D'd, D'e ····) from one stamper S (S') are manufactured by injection molding(see, Figs. 2 and 3).

In the manufacturing lot L, each of the products (single layered disc)includes the same tilt, as aforementioned.

That is, each of the lower single layered discs Da, Db, Dd, De, ··· ·selected from one manufacturing lot L is the same tilt, and each of the upper single layered discs D'a, D'b, D'd, D'e, ··· · selected from one manufacturing lot L' is the same tilt.

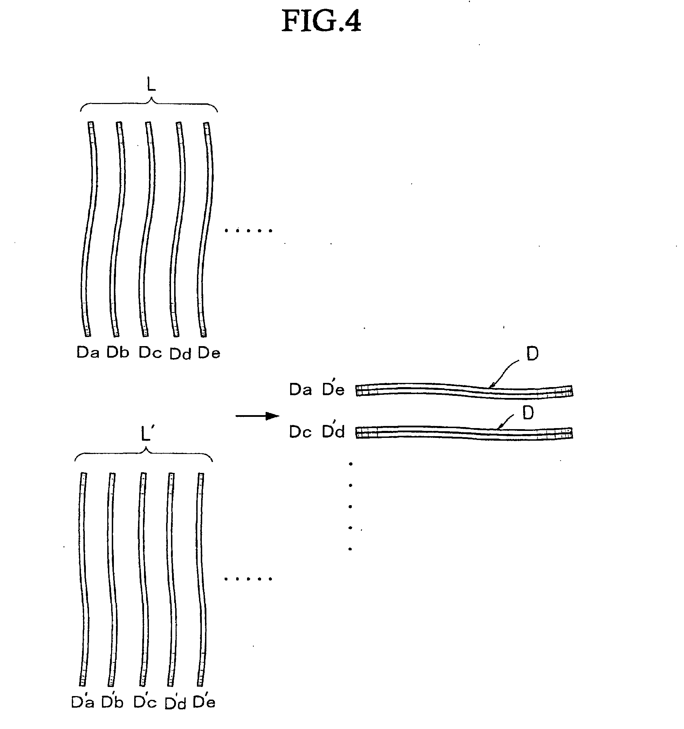

An optional one single layered disc (for example, Da, Dc, ···· ) is selected out of the manufacturing lot L (for example, Da,Db, Dc, Dd, and De, ···· ) and similarly an optional one single layered disc (for example, D'e, D'd, ···· ) is selected out of the manufacturing lot L' (for example, D'a, D'b, D'c, D'd, and D'e, ····) and both of them Da x D'e (incidentally, x means a combination), Da x D'e, Dc x D'd ····are tested for lamination (see Fig. 4).

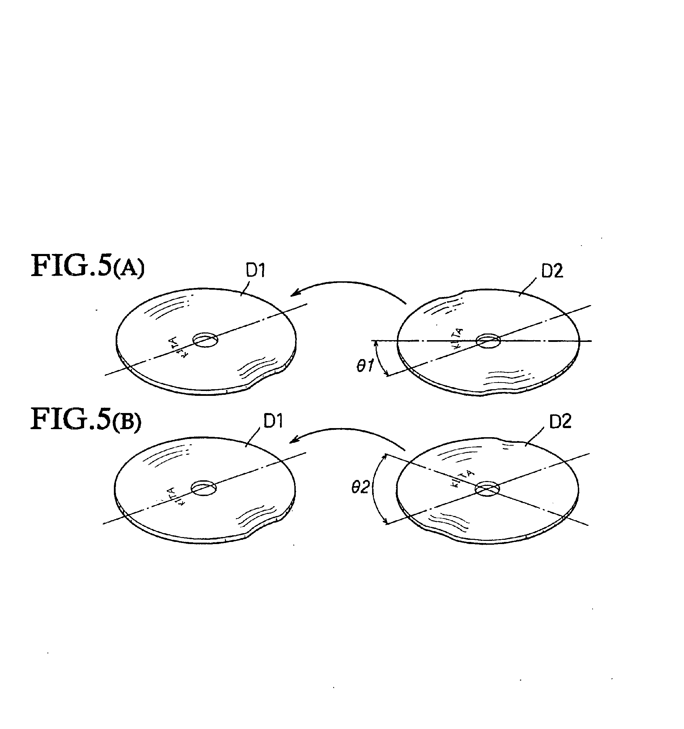

In this connection, the phase difference between both of the single layered discs (that is, an angle gap of one single layered disc with respect to the other single layered disc) for example, 30° *(θ* 1 ) (D'a x D'e), 60° (θ2) (D'c x D'd), 90° , ....,330° ,360° are tested for lamination, 12 combinations (θ1~θ12) in total(see Fig. 5).

After lamination of both of the single layered discs (after lamination, the optical disc D as integrated may be obtained). Out of these, what is most lessened is the standard tilt.

In other words, the phase difference θ in the direction of rotation of both of the single layered discs each other where the tilt is most lessened, is standardized as the most suitable phase.

For instance, if the most suitable phase difference is 60° , the upper single layered disc is laid on the lower single layered disc as shifted at an angle of 60° for lamination.

As a result, the tilt (specifically, tangential tilt) of the optical disc as integrated is most lessened.

In this manner, if the laminating test for the single layered disc is preliminarily carried out to pre-determine the smallest phase difference θ , the best laminating condition is set for the upper and lower single layered discs (D1, D2)

In the actual manufacturing step, this best phase difference is given when both of the single layered discs to obtain extremely small tilt of the optical disc D bodily manufactured.

It is noted that in the aforementioned instance, although the test is carried out to give the phase difference under 30° unit but not limited, for example, 10° unit or 20° unit.

Notwithstanding, the unit is smaller to cause a time consuming but more minute.

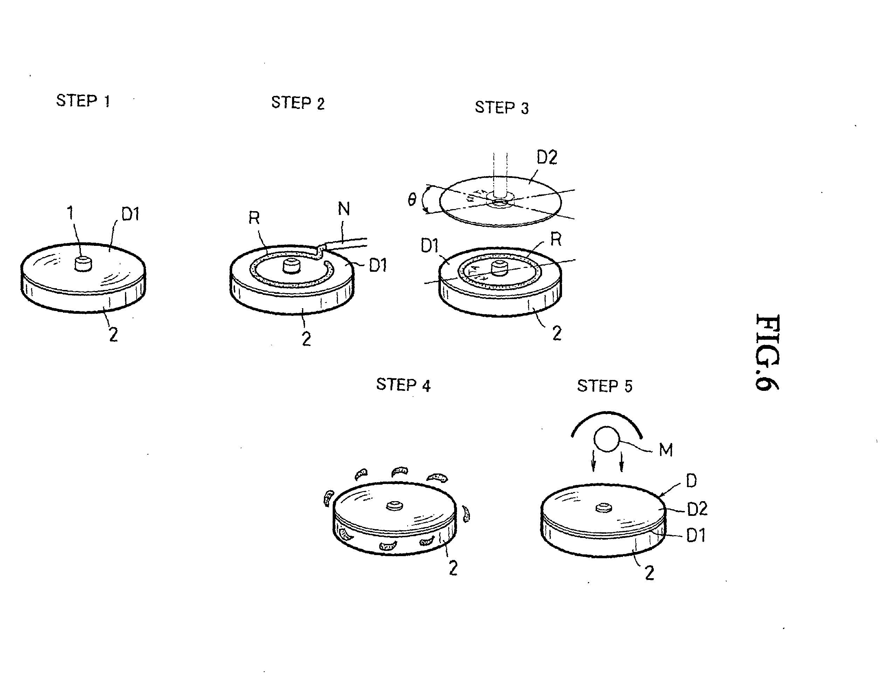

Fig. 6 is a schematic view showing the steps of manufacturing the optical disc.
1) The lower single layered disc D1 is laid on the rot at able holding table 2.
2) Holding table is rotated and ultraviolet curable resin R is dropped from a nozzle N to apply the same in a form of the circle.
3) Next, the upper single layered disc D2 is laid on ultraviolet curable resin R applied lower single layered disc D1 when the upper single layered disc D2 is shifted at a certain angle θ.
   That is, this is the condition where the phase difference θ in the direction of rotation is given between the lower and upper single layered discs.
   In this case, the phase differencedθ may be distinguishable as a mark W, for instance, a character, and a pattern (see Fig. 5).
   This phase differenced θ is a value (this allows the tilt to minimize) set from laminating test in the manufacturing lots L, L' in advance.
4 ) Next, ultraviolet rays are irradiated from an irradiation unit M to both of the upper and lower single layered discs.

Upon irradiation of ultraviolet rays, ultraviolet curable resin R is cured to integrate the lower single layered discs D1 and D2.

As a result, the optical disc D as manufactured, is a product which minimizes the tilt (especially, the tangential tilt).

Before irradiating the ultraviolet rays, the optical disc is within an atmosphere of gas pressure, that is, the pressure container 3 to apply the pressure to exhaust the minute air bubbles contained in ultraviolet curable resin as adhesive.

The present invention has been detailed but not limited to the embodiment and needless to say that various modification may be made within the scope of the essence of the invention.

The principle of the present invention may be applicable to any method such as off-line and on-line thereof.

Adhesives used in both of the single layered discs D1 and D2 may be adaptable to other than ultraviolet curable resin.

For example, a double adhesive tape may be used to bond them.

### Industrial Applicability

The present invention relates to a method for manufacturing the optical disc which minimizes the tilt at most but may be applicable to a memory disc formed by laminating those other than the optical disc.

It is possible to use for minimization of the tilt of integrated one at most, in the method for laminating each of two members in different manufacturing lot.

In this manner, the present invention may be utilized in any field which expects the same result within the scope of the essence of the invention.

## Claims

1. A method for manufacturing an optical disc **characterized in that** two single layered discs, such as a first and second single layered discs are laminated to have them integrated, and wherein a phase difference in the direction of rotation is given between the first and second single layered discs to laminate the latter.

2. A method for manufacturing an optical disc as claimed in Claim 1 **characterized in that** the first single layered disc and the second single layered disc belong to the different manufacturing lots, respectively.

3. A method for manufacturing an optical disc as claimed in Claim 1 **characterized in that** that a phase difference in the direction of rotation, which makes a tilt minimum when the single layered disc selected from the manufacturing lot L having the first single layered disc and the other single layered disc selected from the manufacturing lot having the first single layered disc and the other single layered disc having the second single layered disc are laminated by changing the phase a plurality of times within the range of 0° ~ 360° in the direction of rotation.

4. A method for manufacturing an optical disc as claimed in Claim 1 **characterized in that** the lamination of the first single layered disc and the second single layered disc is made by the use of ultraviolet curable resin R.

5. A method for manufacturing an optical disc as claimed in Claim 1 **characterized in that** the lamination of the first single layered disc and the second single layered disc are made by the use of a double adhesive tape.

6. A method for manufacturing an optical disc by either one of Claims 1 ~ 5 the methods as aforementioned.
